# EUROPÄISCHE PATENTSCHRIFT

(11) **EP 3 819 546 B1**
(45) Veröffentlichungstag und Bekanntmachung des Hinweises auf die Patenterteilung: **27.07.2022**
(21) Anmeldenummer: 20191954.5
(22) Anmeldetag: 20.08.2020
(51) Int. Cl.: F24C 15/00, F21V 29/80, F21V 33/00, F21W 131/307, F21Y 115/10, F21V 8/00

(54) **BELEUCHTUNGSEINRICHTUNG FÜR EIN GARGERÄT**
LIGHTING DEVICE FOR A COOKING DEVICE
DISPOSITIF D'ÉCLAIRAGE POUR UN APPAREIL DE CUISSON

(30) Priorität: 06.11.2019 DE 202019106169 U
(43) Veröffentlichungstag der Anmeldung: 12.05.2021
(73) Patentinhaber: BJB GmbH & Co. KG, 59755 Arnsberg (DE)
(72) Erfinder: Baumeister, Olaf, 59846 Sundern (DE); Harnischmacher, Jörg, 58706 Menden (DE)
(74) Vertreter: Ostriga Sonnet Wirths & Vorwerk

(56) Entgegenhaltungen:
- EP-A1- 3 193 085
- EP-A1- 3 359 881
- WO-A1-2013/098018

## Beschreibung

Die Erfindung betrifft ein Gargerät, insbesondere einen Backofen, einen Dampfgarer oder ein Mikrowellengargerät mit den Merkmalen des Oberbegriffs des Anspruchs 1.

Derartige Gargeräte sind aus dem druckschriftlichen Stand der Technik in ausreichender Form bekannt. Deren Beleuchtungseinrichtungen werden eingesetzt, um den Garraum eines Gargerätes auszuleuchten. Hierzu verfügt die Garraumwandung über eine oder mehrere Ausnehmungen, durch welche das jeweilige Leuchtenbauteil hindurchgeführt werden kann. Klassischerweise handelt es sich hier in der Regel um Leuchtenabdeckungen, durch die ein außerhalb des Garraumes angeordnetes Beleuchtungsgerät Licht in den Garraum emittiert.

In zunehmendem Maße geht die Haushaltsindustrie jedoch dazu über, LEDs als Lichtquelle zur Beleuchtung von Garräumen zu benutzen. Hierbei besteht grundsätzlich das Problem, dass LED Lichtquellen temperatursensibel sind und deshalb über einen möglichst großen Abstand wie auch geeignete weitere technische Maßnahmen gegen die aus dem Garraum abstrahlende Hitze geschützt werden müssen. Deshalb ist man beispielsweise dazu übergegangen, das Licht von einem für die LED Lichtquelle günstigen Einbauort zu platzieren und das Licht von da aus über Lichtleiter in den Garraum einzuführen. Dabei haben sich insbesondere unflexible Lichtleitstäbe aus Glas oder geeigneten hochtemperaturbeständigen Kunststoffen bewährt. Diese werden durch Garraumdecke oder Garraumboden eingeführt und sitzen im Garraum ein. Spezielle Beschichtungen sorgen dafür, dass ein gewünschter Lichtaustritt über die volle Länge des Lichtleitstabes erfolgt und somit ein Lichtleitstab eine jede Garebene des Gargerätes beleuchtet.

EP 3 359 881 A0 zeigt eine Garraumleuchte, deren Lichtleitstab entlang einer Gehäuseaußenwand des Gargerätes geführt ist. Das freie Ende des Lichtleitstabes ist in Richtung Garraumwandung gekrümmt und durchstößt die Garraumwandung zur Lichteinspeisung.

Eine ähnliche Lösung zeigt WO 2013/098018 A1, bei welcher jedoch der Lichtleitstab über eine gewisse Strecke garraumnah geführt ist und mittels einer zweiten Krümmung vor dem der Lichteinspeisung dienenden Ende in Richtung Gehäuseaußenwand geführt ist.

EP 3 193 085 A1 zeigt eine Leuchte für eine Gargerät wie auch ein Gargerät mit dieser Leuchte. Die Leuchte verfügt über einen ungekrümmten Lichtleitstab, welcher über einen überwiegenden Teil seiner Länge im Garraum einsitzt und das eingespeiste Licht im Wesentlichen über seine Außenumfangsfläche abgibt, um den Garraum zu beleuchten.

Aufgabe der Erfindung ist es, ein Gargerät mit einer alternativen Beleuchtungseinrichtung zu schaffen.

Gelöst wird diese Aufgabe von einem Gargerät mit den Merkmalen des Anspruchs 1, wonach
- der Krümmungswinkel außerhalb der Grenzen der Totalreflexion des Lichtleitstabes liegt,
- der Lichtleitstab im Bereich der Krümmung mit einer reflektierenden Beschichtung versehen ist, deren reflektierende Oberfläche zur Oberfläche des Lichtleitstabes weist,
- die reflektierende Beschichtung im Bereich der Krümmung austretendes Licht in den Lichtleitstab rückspeist.

Der wesentliche Vorteil der Erfindung ist darin zu sehen, dass eine punktförmige Lichtquelle an geeigneter Position die Garraumwandung durchbricht, so dass die Wandungsöffnung möglichst klein gehalten werden kann. Dies vermindert den Wärmeaustritt aus dem Garraum in den Geräteraum und somit die Temperaturbelastung der technischen Bauteile, insbesondere der LED-Lichtquelle.

Die Erfindung spielt ihren Vorteil immer dann aus, wenn die baulichen Bedingungen einen Winkel jenseits der Totalreflexion des Lichtleistabes erfordern. Mit der Beschichtung, deren reflektierende Oberfläche zur Oberfläche des Lichtleitstabes weist, kann aus dem Lichtleitstab austretendes Licht rückgespeist werden. Auf diese Weise werden Lichtverluste auch außerhalb der Grenzen einer Totalreflexion gelegenen Krümmung verringert.

Eine Ausführungsform der Erfindung sieht vor, dass der Lichtleitstab an seinem Lichtaustrittsende eine Lichtaustrittsfläche ausbildet, die mit wenigstens einer das Licht definiert richtenden, optischen Struktur versehen ist. Im Gegensatz zu üblichen Satinierungen erlauben es solche Strukturen, dass austretende Licht gezielt zu richten, anstatt lediglich eine diffuse Lichtverteilung zu erreichen. Durch solche optischen Strukturen bzw. optische Elemente - hierbei kann es sich um kleinste Optikstrukturen im Mikro- und Nanometerbereich handeln - kann beispielsweise eine ungünstige Lichtverteilung korrigiert werden, die auf Grund nicht ausreichend möglicher Krümmung des Glasstabes entstehen kann. Auch besonders schwer auszuleuchtende Eck- und Randbereiche eines Garraumes lassen sich auf diese Weise gezielt ausleuchten.

Weitere Vorteile der Erfindung sowie ein besseres Verständnis derselben bietet die nachfolgende Beschreibung eines Ausführungsbeispiels. Es zeigen:
Figur 1 eine Beleuchtungseinrichtung in perspektivischer Darstellung,
Figur 2 eine nicht erfindungsgemäße Ausführungsform einer Beleuchtungseinrichtung.

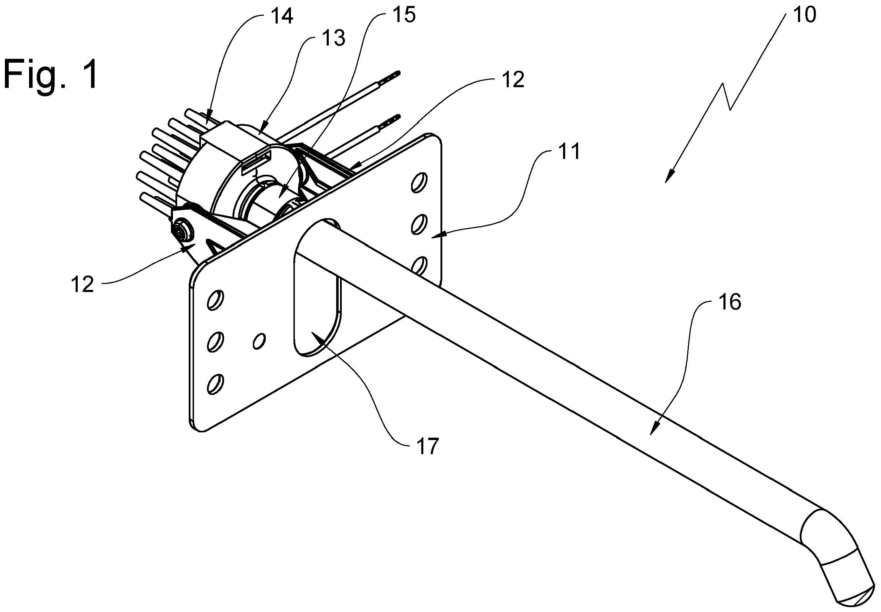

In der Figur 1 ist eine Beleuchtungseinrichtung des erfindungsgemäßen Gargerätes insgesamt mit der Figur 10 bezeichnet.

Die Beleuchtungseinrichtung 10 verfügt über eine Montageplatte 11, mit welcher sie an einem Gargerätebauteil, beispielsweise einem Halteblech, montierbar ist. An zwei einander gegenüberliegenden Montagearmen 12 ist eine Halteschale 13 angeordnet, welche eine nicht weiter dargestellte Platine mit darauf angeordneter LED aufnimmt sowie den Kühlkörper 14 trägt, welcher die Betriebswärme der LED abführt.

Auf der dem Kühlkörper abgewandten Seite bildet die Halteschale 13 einen Haltekragen 15 aus, welcher eine Lichtaustrittsöffnung umgibt. In den Ringraum des Haltekragens 15 ist ein Lichtleitstab 16 eingesetzt. In diesem Kragen wird der Lichtleitstab 16 mechanisch gehalten. Dies kann über eine nicht näher bezeichnete Klammer geschehen, die insbesondere die Wände eines geschlitzten Haltekragens 15 gegen den Lichtleitstab 16 presst und so einen Reibschluss bildet. Alternativ zu Klammer kann der geschlitzte Haltekragen 15 auch mit einem Außengewinde versehen sein, so dass der Haltekragen 15 mittels einer Mutter reibschlüssig gegen den Lichtleitstab 16 gedrückt werden kann. Auch ist es denkbar, eine Formschlussverbindung zwischen Haltekragen 15 und dem Lichtleitstab 16 herzustellen, beispielsweise durch eine Rastverbindung. Ein Ausschnitt 17 der Montageplatte 11 ermöglicht den Durchtritt des Lichtleitstabes 16 durch die Montageplatte 11.

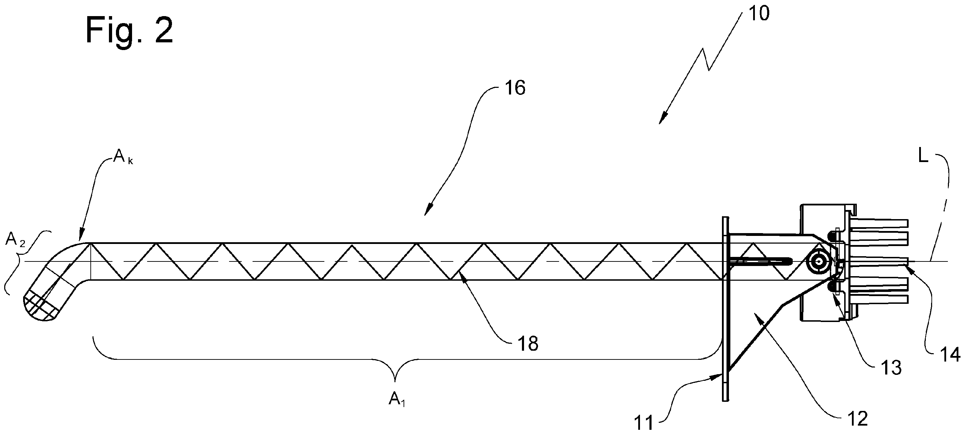

Figur 2 zeigt eine Beleuchtungseinrichtung, die nicht Teil des Schutzumfangs ist. Dargestellt hier ist deren Längsmittelachse L sowie schematisch der Verlauf eines exemplarischen Lichtstrahls 18, der von der nicht weiter sichtbaren LED-Lichtquelle in das kühlkörperseitige Ende des Lichtleitstabes 16 eingebracht wird und den Lichtleitstab 16 an seinem freien, dem Kühlkörper abgewandten Ende verlässt. Es ist gut ersichtlich, dass der Lichtleitstab 16 einen ersten Abschnitt A₁ ausbildet, der sich ausgehend von der LED-Lichtquelle durch den Ausschnitt 17 der Montageplatte bis zu einem Krümmungsabschnitt A_{K} erstreckt, an welchen sich ein zweiter Abschnitt A₂ anschließt, der im freien Ende des Lichtleitstabes ausläuft. Der Krümmungsabschnitt A_{K} bzw. sein Krümmungsradius bzw. dessen Biegeradius liegt innerhalb der Totalreflektion des Lichtleitstabmaterials, so dass der exemplarisch und schematisch dargestellte Lichtstrahl 18 den Lichtleitstab 16 nicht im Bereich der Krümmung verlässt, sondern an dessen Innenoberfläche vollständig reflektiert durch den Krümmungsabschnitt A_{K} hindurch in den zweiten Abschnitt A₂ geworfen wird.

Aus dem zweiten Abschnitt A₂ tritt der Lichtstrahl 18 aus, wobei eine geeignete Oberflächenstruktur sowie Oberflächenformgebung des freien Endes die Art und Weise des Lichtaustritts beeinflusst. Eine geeignete Satinierung sorgt für eine Streuung. Andere optisch wirksame Oberflächengestaltungen sind dazu geeignet, das Licht nochmals zu lenken und statt der soeben genannten diffusen Abstrahlcharakteristik gerichtete Abstrahlcharakteristiken zu schaffen.

Der wesentliche Vorteil an der soeben beschriebenen Beleuchtungseinrichtung ist die Möglichkeit, den Lichtleiter 16 seinem ersten Abschnitt A₁, dem ungekrümmten Abschnitt außerhalb der Garraumwandung zu führen und lediglich für das sich an den Krümmungsabschnitt A_{K} anschließende Ende des Lichtleitstabes 16 eine entsprechend durchmesserreduzierte Garraumwandungsöffnung vorzusehen, durch welche der Lichteintritt in den Garraum realisiert wird. Auf diese Weise werden nicht nur die für die Beleuchtung erforderlichen Garraumöffnungsquerschnitte minimiert. Hinzu kommt, dass die der Gartemperatur ausgesetzten Oberflächen des Lichtleitstabes gegenüber Varianten aus dem Stand der Technik erheblich reduziert sind und deshalb eine Wärmeabfuhr über den Lichtleitstab in den Bereich hinter der Garraumwandung sich ebenfalls erheblich reduzieren lässt.

### Bezugszeichenliste:

- 10: Beleuchtungseinrichtung
- 11: Montageplatte
- 12: Montagearm
- 13: Halterschale
- 14: Kühlkörper
- 15: Haltekragen
- 16: Lichtleitstab
- 17: Ausschnitt
- 18: Lichtstrahl

- A₁: erster Abschnitt
- A_{K}: Krümmungsabschnitt
- A₂: zweiter Abschnitt

## Patentansprüche

1. Gargerät, insbesondere Backofen, Dampfgarer oder Mikrowellengargerät,
- mit einem Garraum, der von einer Garraumwandung umgeben ist, wobei die Garraumwandung eine Öffnung aufweist, durch welche hindurch ein Leuchtenbauteil eines Beleuchtungsgeräte geführt ist, welches der Beleuchtung des Garraumes dient,
- mit einer Beleuchtungseinrichtung (10) mit einer Lichtquelle und einem Lichtleiter, der das von der Lichtquelle emittierte Licht in den Garraum weitergibt, wobei der Lichtleiter ein unflexibler Lichtleitstab (16) ist, der das Leuchtenbauteil bildet und die Öffnung in der Garraumwandung durchstößt, wobei
- das der Lichtquelle abgewandte Ende des Lichtleitstabes (16) gegenüber einer Längsachse des Lichtleitstabes (16) abgewinkelt ist, so dass das aus dem abgewinkelten Ende austretende Licht in einem Winkel zur Längsachse in einen Garraum eingeleitet werden kann, wobei
- der Abschnitt des Lichtleistabes (16) zwischen der Lichtquelle und dem abgewinkelten Ende außerhalb des Garraumes angeordnet ist, wobei
- die Krümmung des abgewinkelten Endes zur Garraumwandung gerichtet ist, wobei
- der sich an die Krümmung anschließende Abschnitt des Lichtleiters durch die Öffnung in der Garraumwandung geführt ist,
**dadurch gekennzeichnet, dass**
- der Krümmungswinkel außerhalb der Grenzen der Totalreflexion des Lichtleitstabes liegt,
- der Lichtleitstab (16) im Bereich der Krümmung mit einer reflektierenden Beschichtung versehen ist, deren reflektierende Oberfläche zur Oberfläche des Lichtleitstabes weist,
- die reflektierende Beschichtung im Bereich der Krümmung austretendes Licht in den Lichtleitstab (16) rückspeist.

2. Gargerät nach Anspruch 1 mit einer Beleuchtungseinrichtung bei welcher der Lichtleitstab (16) an seinem Lichtaustrittsende eine Lichtaustrittsfläche ausbildet, die mit wenigstens einer das Licht definiert richtenden, optischen Struktur versehen ist.

## Claims

1. Cooking device, in particular oven, steam cooker or microwave cooking device,
- having a cooking chamber, which is surrounded by a cooking chamber wall, wherein the cooking chamber wall has an opening, through which a light component of a lighting device is guided, which serves to illuminate the cooking chamber,
- having a lighting device (10) with a light source and an light guide, which forwards the light emitted by the light source into the cooking chamber, wherein the light guide is an inflexible light guide rod (16), which forms the light component and pierces through the opening in the cooking chamber wall, wherein
- the end of the light guide rod (16) facing away from the light source is bent in relation to a longitudinal axis of the light guide rod (16), such that the light emerging out of the bent end can be introduced into a cooking chamber at an angle to the longitudinal axis, wherein
- the section of the light guide rod (16) between the light source and the bent end is arranged outside the cooking chamber, wherein
- the curved portion of the bent end is directed towards the cooking chamber wall, wherein
- the section of the light guide attached to the curved portion is guided through the opening in the cooking chamber wall,
**characterised in that**
- the curvature angle lies outside the limits of the total reflection of the light guide rod,
- the light guide rod (16) is provided with a reflecting coating in the region of the curvature, the reflecting surface of which points towards the surface of the light guide rod,
- the reflecting coating feeds light emerging in the region of the curvature back into the light guide rod (16).

2. Cooking device according to claim 1, having a lighting device in which the light guide rod (16) forms a light outlet surface on its light outlet end, said light outlet surface being provided with at least one optical structure directing the light in a defined manner.

## Revendications

1. Appareil de cuisson, en particulier four, cuiseur à vapeur ou appareil de cuisson à microondes,
- avec une chambre de cuisson qui est entourée par une paroi de chambre de cuisson, laquelle paroi de chambre de cuisson présente une ouverture à travers laquelle un composant de luminaire d'un appareil d'éclairage qui sert à éclairer la chambre de cuisson est guidé,
- avec un dispositif d'éclairage (10) doté d'une source lumineuse et d'un conducteur optique qui restitue dans la chambre de cuisson la lumière émise par la source lumineuse, le conducteur optique étant un guide de lumière rigide (16) qui forme le composant de luminaire et traverse l'ouverture dans la paroi de chambre de cuisson,
- dans lequel l'extrémité du guide de lumière (16) opposée à la source lumineuse forme un coude par rapport à un axe longitudinal du guide de lumière (16) de sorte que la lumière sortant de l'extrémité coudée peut être introduite dans une chambre de cuisson sous un certain angle par rapport à l'axe longitudinal,
- dans lequel la section du guide de lumière (16) entre la source lumineuse et l'extrémité coudée est disposée à l'extérieur de la chambre de cuisson,
- dans lequel la courbure de l'extrémité coudée est orientée vers la paroi de la chambre de cuisson et
- dans lequel la section du conducteur optique se raccordant à la courbure est guidée à travers l'ouverture dans la paroi de la chambre de cuisson,
**caractérisé en ce que**
- l'angle de courbure se trouve hors des limites de la réflexion totale du guide de lumière,
- le guide de lumière (16) est doté dans la région de la courbure d'un revêtement réfléchissant dont la surface réfléchissante est orientée vers la surface du guide de lumière et
- le revêtement réfléchissant renvoie la lumière sortant dans la région de la courbure dans le guide de lumière.

2. Appareil de cuisson selon la revendication 1 avec un dispositif d'éclairage dans lequel le guide de lumière (16) présente à son extrémité de sortie de lumière une surface de sortie de lumière qui est dotée d'au moins une structure optique orientant la lumière de manière définie.
